# EUROPEAN PATENT APPLICATION

(11) **EP 2 506 534 A2**
(43) Date of publication of application: **03.10.2012**
(21) Application number: 12158130.0
(22) Date of filing: 05.03.2012
(51) Int. Cl.: H04L 29/08, G06Q 10/10

(54) **Method and apparatus for providing person of interest-based network service**

(30) Priority: 07.03.2011 KR 20110019892
(71) Applicant: Samsung Electronics Co., Ltd., Suwon-si, Gyeonggi-do, 443-742 (KR)
(72) Inventor: Choi, Yoon-hee, Gyeonggi-do (KR); Kim, Duck-hoon, Seoul (KR); Park, Hee-seon, Seoul (KR); Yoon, Seok-hyun, Gyeonggi-do (KR)
(74) Representative: Jenkins, Richard Gavin

(57) **Abstract**

A method of providing a person of interest (401) based-network service by receiving (2) information regarding the person of interest that is directly input (1) in a terminal (420,440); setting up (3) a representative person based on the received information regarding the person of interest; and setting up a virtual network based on users that have sent information regarding a person of interest corresponding to the set representative person.

## Description

### PRIORITY

This application claims priority under 35 U.S.C. § 119 to a Korean Patent Application No. 10-2011-0019892, which was filed in the Korean Intellectual Property Office on March 7, 2011, the entire disclosure of which is incorporated herein by reference.

### BACKGROUND OF THE INVENTION

### 1. Field of the Invention

The present invention relates generally to a method and apparatus for providing a person of interest based-network service, and more particularly, to a method and apparatus for providing a network service for forming a relation by the medium of a person of interest that is directly registered in the real world.

### 2. Description of the Related Art

Recently, the use of Social Network Services (SNS) has increased with the progress of communication technology and an increased supply of smart phones. In a personal connection-based SNS, in order to form a relation between member users, friend recommendations are made when a user registers on the personal connection-based SNS through an e-mail account, and then a new friend is recommended based on existing friend information such as career or an educational background. In a location-based SNS, users check-in to places visited, but a service for making friends is not supported. Also, in a person-based Augmented Reality (AR) service, although a person of interest is recognized, the person of interest is an object for providing information, and not related to a service for making friends.

### SUMMARY OF THE INVENTION

Accordingly, the present invention has been made to solve the above-mentioned problems, and to provide at least the advantages described below. An aspect of the present invention provides a method and apparatus for providing a person of interest based-network service for providing a method of setting up a person of interest that is directly registered in the real world as a representative person and of forming a relation by the medium of the person of interest.

According to an aspect of the present invention, a method of providing a person of interest based-network service includes receiving information regarding the person of interest that is directly input in a terminal; setting up a representative person based on the received information regarding the person of interest; and setting up a virtual network based on users that have sent information regarding a person of interest corresponding to the set representative person.

According to another aspect of the present invention, an apparatus for providing a person of interest based-network service includes a communication unit for receiving information regarding a person of interest that is directly input in a terminal; and a control unit for setting up a representative person based on the received information regarding the person of interest and for setting up a virtual network based on users that have sent information regarding a person of interest corresponding to the set representative person on the basis of the received information regarding the person of interest.

According to yet another aspect of the present invention, a computer-readable recording medium having embodied thereon a program for executing a method for providing a person of interest based-network service includes receiving information regarding a person of interest that is directly input in a terminal; setting up a representative person based on the received information regarding the person of interest; and setting up a virtual network based on users that have sent information regarding a person of interest corresponding to the set representative person.

### BRIEF DESCRIPTION OF THE DRAWINGS

The above and other aspects, features and advantages of the present invention will be more apparent from the following detailed description taken in conjunction with the accompanying drawings in which:
FIG. 1 is a block diagram illustrating a person of interest based-network service system according to an embodiment of the present invention;
FIG. 2 is a block diagram illustrating a network service server according to an embodiment of the present invention;
FIG. 3 is a diagram illustrating an example of a scenario of a method of providing a person of interest based-network service, according to an embodiment of the present invention;
FIG. 4 is a diagram illustrating an example of a scenario of a method of providing a person of interest based-network service, according to another embodiment of the present invention;
FIG. 5 is a flowchart illustrating a method of providing a person of interest based-network service, according to an embodiment of the present invention; and
FIG. 6 is a flowchart illustrating a method of providing a person of interest based-network service, according to another embodiment of the present invention.

### DETAILED DESCRIPTION OF EMBODIMENTS OF THE PRESENT INVENTION

Hereinafter, the present invention will be described in detail by explaining various embodiments of the invention with reference to the accompanying drawings, in which aspects of the present invention are illustrated.

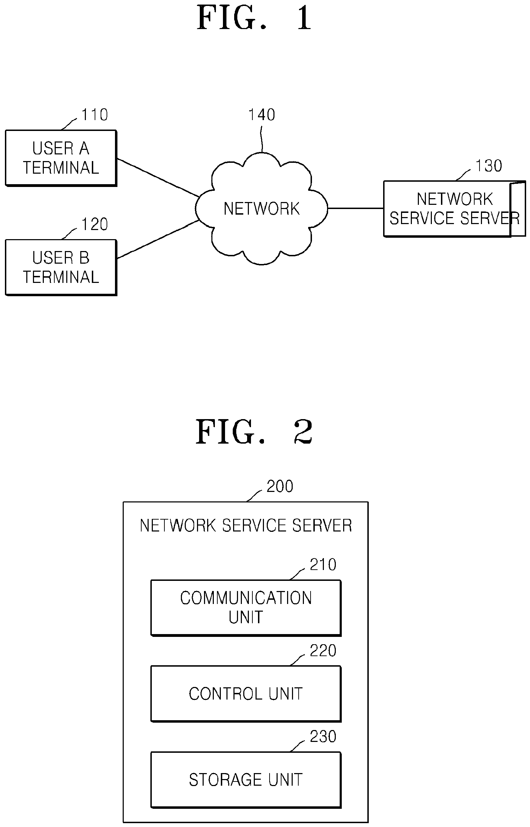

FIG. 1 is a block diagram illustrating a person of interest based-network service system according to an embodiment of the present invention.

Referring to FIG. 1, the person of interest based-network service system includes a user A terminal 110, a user B terminal 120, a network service server 130, and a network 140. Although FIG. 1 is a diagram illustrating only two user terminals, the number of user terminals is not limited.

The user A terminal 110 and the user B terminal 120 communicate with the network service server 130 via the network 140. The network 140 may be an Internet network, a mobile communication network, a broadcasting network, a cable TV network, or a satellite network. The network 140 may be a service network or an access network. The network 140 may use any communication protocol capable of connecting the user A terminal 110 and the user B terminal 120 with the network service server 130.

The user A terminal 110 and the user B terminal 120 may be notebook computers, Personal Computers (PCs), mobile devices, or set-top boxes to access the network service server 130. The user A terminal 110 and the user B terminal 120 provide information regarding a person of interest that is directly input by users A and B and predetermined information related to the users A and B to the network service server 130, and receive person of interest based-network service information from the network service server 130. The users A and B, which are members of a network service, may have a friend relation with each other, for example or another relation, depending on the policy of service providers.

The network service server 130 may be a server for operating a person of interest based-network service or another apparatus for providing the person of interest based-network service. The person of interest based-network service may be referred to as a person of interest-based social network service.

FIG. 2 is a block diagram illustrating a network service server 200 according to an embodiment of the present invention.

Referring to FIG. 2, the network service server 200 includes a communication unit 210, a control unit 220, and a storage unit 230.

The communication unit 210 receives information regarding a person of interest that is directly input in a user terminal. The person of interest is directly input by a user in the form of a name or in the form of an image, or is recognized through a sensor of a terminal in the terminal itself The recognition of the person of interest through the sensor is used to recognize a face of the person of interest input to an image capture device such as a camera or to determine a current position of the person of interest based on Global Positioning System (GPS) information. In this case, the recognition of the person of interest may use person-based Augmented Reality (AR) technology. The GPS information of the person of interest may require verification of the person of interest for privacy protection purposes. When a user checks in the information regarding the person of interest in a predetermined storing place or application of the user terminal by using the above-described method, the user terminal sends the information regarding the person of interest to the network service server 200.

The communication unit 210 may receive personal information such as a gender or age of a user that has sent the information regarding the person of interest and external situation information such as time or a place related to the user.

The control unit 220 sets up a representative person based on the received information regarding the person of interest. According to an embodiment of the present invention, the representative person is a person selected according to a predetermined standard from among person of interests. For example, when more than a predetermined number of people are received from among the persons of interest, the person of interest may be selected as a representative person, where the control unit 220 sets up a representative person by using clustering and matching methods. If a representative person is not stored in the storage unit 230, the control unit 220 sets up a representative person by clustering the received person of interests according to a similarity standard. For example, when person of interests who are input at a certain point of time are "person A, person A, person B, person B, person B, and person C", the control unit 220 sets up the "person A, person B, and person C" as representative persons by using a clustering method. When representative persons are stored in the storage unit 230, the control unit 220 resets a representative person by comparing and matching the received person of interest with the stored representative person. For example, the control unit 220 compares the received person of interest with the stored representative person and determines whether to reset a representative person. That is, the control unit 220 determines whether the received person of interest is the existing representative person. When the received person of interest is not the existing representative person, the control unit 220 sets up the received person of interest as a representative person. For example, when "person A" is received as a person of interest who is input at a certain point of time and when the stored representative persons are "person B and person C", the control unit 220 resets "person A, person B, and person C" as representative persons by using a matching method. As another embodiment of the present invention, even though a representative person is stored in the storage unit 230, when there are many stored representative persons, the control unit 230 may set up a representative person by using a clustering method and then using a matching method.

The control unit 220 may generate a representative person document based on the set representative person and may manage the representative person document. The representative person document may include information regarding the representative person and user information regarding the representative person registered as a person of interest.

The control unit 220 sets up a virtual network based on a representative person and users that have sent information regarding a person of interest corresponding to the representative person. Alternatively, the control unit 220 may set up a virtual network only by using the users that have sent the information regarding the person of interest corresponding to the representative person. In both cases, the control unit 220 may set up a more suitable virtual network by considering user information such as personal information or external situation information from among the users that have sent the information regarding the person of interest, for example, by considering the similarity of users' time and space information or the number of registrations and check-ins for a representative person (the number of registrations of a person of interest for a representative person).

The control unit 220 may recommend the formation of a relation (for example, a friend relation) to members of the set up virtual network. The control unit 220 may recommend the formation of a relation between the set representative person and the user that has sent information regarding a person of interest corresponding to the representative person to both the set representative person and the user, or may recommend the formation of a relation between the users that have sent the information regarding a person of interest corresponding to the representative person to the users. For example, the control unit 220 may recommend a friend to users who have set up a movie start A as a person of interest by sending a message "He/She became a fan of movie star A in this summer like you. Would you be friends with him/her and talk about movie star A?" to the users. The control unit 220 may recommend to restrictively from a relation to the users according to users' personal information or situation information, and may visually suggest a new relation recommendation to a user by using a timeline or a map. The control unit 220 may provide target advertisement information to the user who may be recommended with the formation of a relation.

When information such as social media publishing, related to a representative person or related to a user having a relation is updated, the control unit 220 may provide the updated information to another user having a relation. For example, the control unit 220 may provide summary information (for example, a user A met somebody today) from a registered record or information that functions as a visitor book of a representative person.

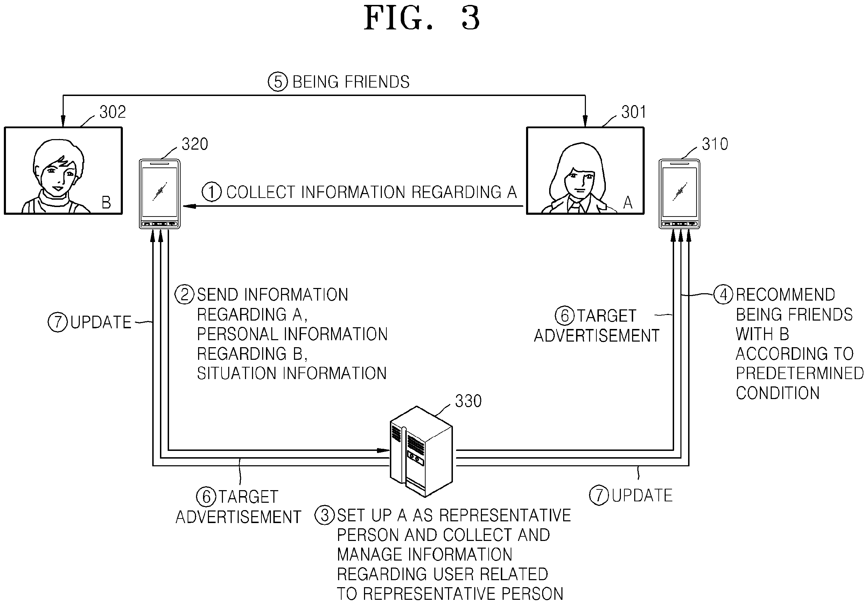

FIG. 3 is a diagram illustrating an example scenario of a method of providing a person of interest based-network service, according to an embodiment of the present invention.

Referring to FIG. 3, a user B 302 collects information regarding a person A 301 and registers the person A 301 as a person of interest in a terminal 320 of the user B 302. Then, the terminal 320 of the user B 302 sends information regarding the person of interest A 301 to a person of interest based-network service server 330. The terminal 320 of the user B 302 sends personal information regarding the user B 302 or situation information to the person of interest based-network service server 330. The person of interest based-network service server 330 sets the received person of interest A 301 as a representative person, collects user information related to the representative person, that is, information regarding the user B 302, and manages the information regarding the user B 302 together with the representative person. Then, when the person of interest A 301 and the user B 302 satisfy a predetermined condition (for example, similarity in living location, similarity in age, and the like), the person of interest based-network service server 330 recommends being friends with the user B 302 to the person of interest A 301. The person of interest based-network service server 330 provides target advertisement information to members of the set up virtual network, the person of interest A 301, or the user B 302. If the members have a relation with each other, they have similar interests, and thus the members may be suitable for the target advertisement. When information regarding the members of the set up virtual network is updated, the person of interest based-network service server 330 may provide the updated information to the person of interest A 301 or the user B 302. That is, when information, for example, social media publishing, regarding a representative person or related to a user having a relation is updated, the person of interest based-network service server 330 may provide the updated information to the representative person or another user having a relation.

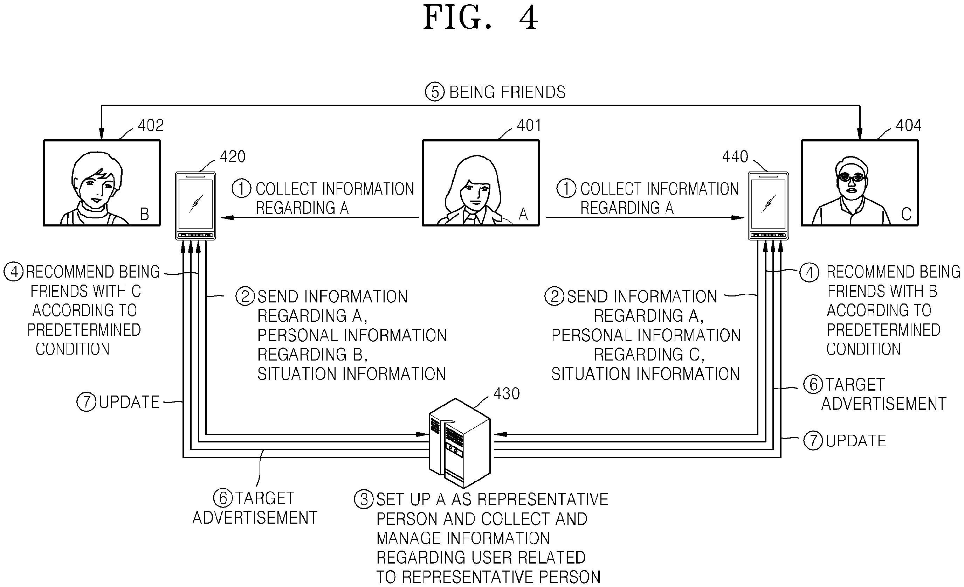

FIG. 4 is a diagram illustrating an example of a scenario of a method of providing a person of interest based-network service, according to another embodiment of the present invention.

Referring to FIG. 4, a user B 402 and a user C 404 collect information regarding a person A 401 and register the person A 401 as a person of interest in a user B terminal 420 and a user C terminal 440. Then, the user B terminal 420 and the user C terminal 440 send information regarding the person A 401 to a person of interest based-network service server 430. The user B terminal 420 and the user C terminal 440 respectively send personal information regarding the user B 402 and the user C 404 or situation information to the person of interest based-network service server 430. The person of interest based-network service server 430 sets up the received person A 401 as a representative person, collects user information related to the representative person, that is, information regarding the user B 402 and the user C 404, and manages the information regarding the user B 402 and the user C 404 together with the representative person. Then, when the user B 402 and the user C 404 satisfy a predetermined condition (for example, similarity in living location, similarity in age, and the like), the person of interest based-network service server 430 recommends being friends with each other to the user B 402 and the user C 404. The person of interest based-network service server 430 provides target advertisement information to members of a set up virtual network, the user B 402, or the user C 404. If the members have a relation, they have similar interests, and thus the members may be suitable for the target advertisement. When information regarding the members of the set up virtual network, the person A 401, the user B 402, or the user C 404 is updated, the person of interest based-network service server 430 may provide the updated information to the user B 402 or the user C 404. That is, when information, for example, social media publishing, regarding a representative person or related to a user having a relation is updated, the person of interest based-network service server 430 may provide the updated information to another user having a relation.

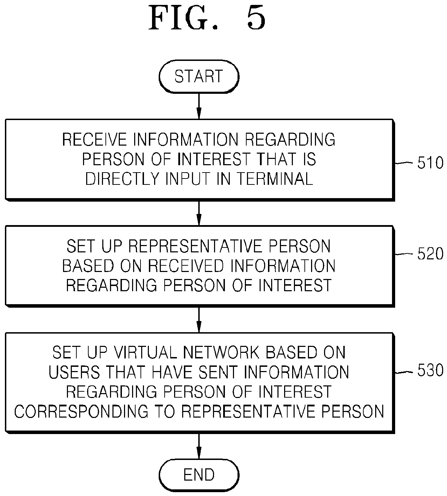

FIG. 5 is a flowchart illustrating a method of providing a person of interest based-network service, according to an embodiment of the present invention.

Referring to FIG. 5, in step 510, an apparatus for providing a person of interest based-network service receives information regarding a person of interest that is directly input in a user terminal. The person of interest may be directly input by a user in the form of a name or in the form of an image, or is recognized through a sensor of a terminal in the terminal itself. The recognition of the person of interest through the sensor is used to recognize a face of the person of interest input to an image capture device such as a camera or to determine a current position of the person of interest based on GPS information. In this case, the recognition of the person of interest may use an AR technology. The GPS information of the person of interest may require verification of the person of interest for privacy protection purposes. When a user checks in the information regarding the person of interest in a predetermined storing place or application of the user terminal by using the above-described method, the user terminal sends the information regarding the person of interest to the apparatus for providing the person of interest based-network service. The apparatus for providing the person of interest based-network service may receive personal information such as a gender or age of a user that has sent the information regarding the person of interest and external situation information such as time or a place related to the user.

In step 520, the apparatus for providing the person of interest based-network service sets up a representative person based on the received information regarding the person of interest. In an embodiment of the present invention, the representative person is a person selected according to a predetermined standard from among person of interests. For example, when more than a predetermined number of same persons are received from among the person of interests, the apparatus for providing the person of interest based-network service may select the person of interest as a representative person. As an embodiment of the present invention, the apparatus for providing the person of interest based-network service may set up a representative person by using clustering and matching methods. If a representative person is not stored in the apparatus for providing the person of interest based-network service, the apparatus for providing the person of interest based-network service sets up a representative person by clustering the received person of interests according to a similarity standard. For example, when person of interests who are input at a certain point of time are "person A, person A, person B, person B, person B, and person C", the apparatus for providing the person of interest based-network service sets up the "person A, person B, and person C" as representative persons by using a clustering method. When representative persons are stored in the apparatus for providing the person of interest based-network service, the apparatus for providing the person of interest based-network service resets a representative person by comparing and matching the received person of interest with the stored representative person. For example, the apparatus for providing the person of interest based-network service compares the received person of interest with the stored representative person and determines whether to reset a representative person. That is, the apparatus for providing the person of interest based-network service determines whether the received person of interest is the existing representative person. When the received person of interest is not the existing representative person, the apparatus for providing the person of interest based-network service sets up the received person of interest as a representative person. For example, when "person A" is received as a person of interest who is input at a certain point of time and when the stored representative persons are "person B and person C", the apparatus for providing the person of interest based-network service resets "person A, person B, and person C" as representative persons by using a matching method. As another embodiment of the present invention, even though a representative person is stored in the apparatus for providing the person of interest based-network service, when there are many stored representative persons, the apparatus for providing the person of interest based-network service may set up a representative person by using a clustering method and then using a matching method. The apparatus for providing the person of interest based-network service may generate a representative person document based on the set representative person and may manage the representative person document. The representative person document may include information regarding the representative person and user information regarding the representative person registered as a person of interest.

In step 530, the apparatus for providing the person of interest based-network service sets up a virtual network based on a representative person and users that have sent information regarding a person of interest corresponding to the representative person. Alternatively, the apparatus for providing the person of interest based-network service may set up a virtual network only by using the users that have sent the information regarding the person of interest corresponding to the representative person. In both cases, the apparatus for providing the person of interest based-network service may set up a more suitable virtual network by considering user information such as personal information or external situation information from among the users that have sent the information regarding the person of interest, for example, by considering the similarity of users' time and space information or the number of registrations and check-ins for a representative person.

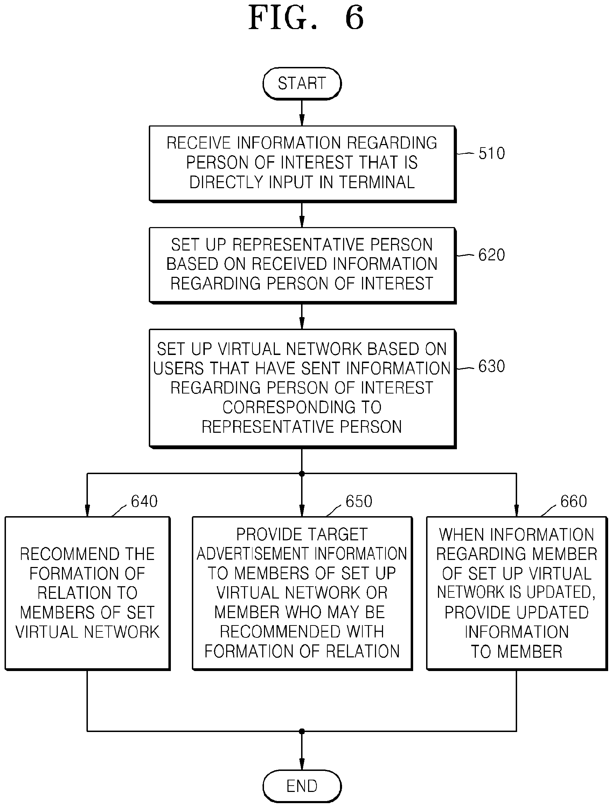

FIG. 6 is a flowchart illustrating a method of providing a person of interest based-network service, according to another embodiment of the present invention.

Referring to FIG. 6, steps 610 through 630 are the same as steps 510 through 530 of FIG. 5, respectively, and thus a detailed description thereof will be omitted.

In step 640, an apparatus for providing a person of interest based-network service may recommend the formation of a relation to members of a set virtual network. In detail, the apparatus for providing the person of interest based-network service may recommend the formation of a relation between the set representative person and a user that has sent information regarding a person of interest corresponding to the representative person to both the set representative person and the user, or may recommend the formation of a relation between the users that have sent the information regarding the person of interest corresponding to the representative person to the users. For example, the apparatus for providing the person of interest based-network service may recommend a friend to users who have set up a movie star A as a person of interest by sending a message "He/She became a fan of movie star A in this summer like you. Would you be friends with him/her and talk about movie star A?" to the users. The apparatus for providing the person of interest based-network service may recommend to restrictively form a relation to the users according to users' personal information or situation information. The apparatus for providing the person of interest based-network service may visually suggest a new relation recommendation to a user by using a timeline or a map when recommending formation of a relation.

In step 650, the apparatus for providing the person of interest based-network service may provide target advertisement information to the members of the set up virtual network or a member who may be recommended with the formation of a relation from the members. If the members have a relation with each other, they have similar interests, and thus, the members may be suitable for the target advertisement. For example, when a user A and a user B set up a famous singer C as a person of interest and the famous singer C is set up as a representative person and thus the user A and the user B are set up as a virtual network, the apparatus for providing the person of interest based-network service sends advertisement information such as information regarding a concert of the famous singer C to the user A and the user B.

In step 660, when information regarding the member of the set up virtual network is updated, the apparatus for providing the person of interest based-network service may provide the updated information to the member. That is, when information, for example, social media publishing, regarding a representative person or related to a user having a relation is updated, the apparatus for providing the person of interest based-network service may provide the updated information to the representative person or another user having a relation. The apparatus for providing the person of interest based-network service may provide summary information (for example, a user A met somebody today) from a registered record or information that functions as a visitors' book of a representative person.

All steps 640 through 660 may be included or only one step selected from the group consisting of steps 640 through 660 may be performed.

The above-described embodiments of the present invention can also be embodied as computer-readable codes on a non-transitory computer-readable recording medium. The computer-readable recording medium is any data storage device that can store data or software components that include instructions or code that can be read by a computer system. Examples of the computer-readable recording medium include Read-Only Memory (ROM), Random-Access Memory (RAM), Compact Disk (CD)-ROMs, magnetic tapes, floppy disks, optical data storage devices, etc. The computer-readable recording medium can also be distributed over network-coupled computer systems so that the computer-readable code is stored and executed in a distributed fashion. Also, functional programs, codes, and code segments for accomplishing the present invention can be easily implemented by programmers of ordinary skill in the art to which the present invention pertains.

While the present invention has been shown and described with reference to certain embodiments thereof, it will be understood by those of ordinary skill in the art that various changes in form and detail may be made therein without departing from the spirit and scope of the present invention as defined by the following claims.

## Claims

1. A method of providing a person of interest based-network service, the method comprising:
receiving information regarding a person of interest that is directly input in a terminal;
setting up a representative person based on the received information regarding the person of interest; and
setting up a virtual network based on users that have sent information regarding a person of interest corresponding to the set representative person.

2. The method of claim 1, wherein setting up the virtual network comprises:
detecting users that have sent the information regarding the person of interest corresponding to the set representative person; and
setting up a virtual network based on information related to a predetermined user from among the detected users.

3. The method of claim 2, wherein the information related to the predetermined user includes personal information related to the predetermined user and external situation information related to the user.

4. The method of claim 1, wherein receiving the information regarding the person of interest comprises receiving information that is directly input by the terminal.

5. The method of claim 1, wherein receiving the information regarding the person of interest comprises receiving information that is recognized by a predetermined sensor in the terminal.

6. The method of claim 5, wherein the information regarding the person of interest includes information verified by the person of interest.

7. The method of claim 1, wherein setting up the representative person based on the received information regarding the person of interest comprises:
clustering the received information regarding the person of interest according to a similarity standard; and
setting up the representative person according to a result of the clustering.

8. The method of claim 1, wherein setting up the representative person based on the received information regarding the person of interest comprises:
comparing and matching the received information regarding the person of interest with a previously stored representative person; and
resetting the representative person according to a result of the matching.

9. The method of claim 1, further comprising generating a document for managing the set representative person and the users that have sent the information regarding the person of interest corresponding to the set representative person.

10. The method of claim 1, further comprising recommending to form a relation to the set representative person and the users that have sent the information regarding the person of interest corresponding to the representative person according to a predetermined standard.

11. The method of claim 1, further comprising recommending to form a relation to the users that have sent the information regarding the person of interest corresponding to the representative person according to a predetermined standard.

12. The method of claim 11, further comprising, when information related to the representative person or a user having the relation is updated, providing the updated information to another user having the relation with the updated user.

13. The method of claim 1, further comprising providing advertisement information to the users that have sent the information regarding the person of interest corresponding to the representative person according to a predetermined standard.

14. An apparatus for providing a person of interest based-network service, the apparatus comprising:
a communication unit for receiving information regarding a person of interest that is directly input in a terminal; and
a control unit for setting up a representative person based on the received information regarding the person of interest and for setting up a virtual network based on users that have sent information regarding a person of interest corresponding to the set representative person on the basis of the received information regarding the person of interest.

15. A computer-readable recording medium having embodied thereon a program for executing a method for providing a person of interest based-network service, the method comprising:
receiving information regarding a person of interest that is directly input in a terminal;
setting up a representative person based on the received information regarding the person of interest; and
setting up a virtual network based on users that have sent information regarding a person of interest corresponding to the set representative person.
